# EUROPÄISCHE PATENTSCHRIFT

(11) **EP 1 864 347 B1**
(45) Veröffentlichungstag und Bekanntmachung des Hinweises auf die Patenterteilung: **25.11.2009**
(21) Anmeldenummer: 06705337.1
(22) Anmeldetag: 14.02.2006
(51) Int. Cl.: H01M 8/02, H01M 8/24

(54) **ANLAGE MIT HOCHTEMPERATUR-BRENNSTOFFZELLEN UND EINER MULTIKOMPONENTEN-HÜLLE ZU EINEM ZELLENSTAPPEL**
UNIT WITH HIGH-TEMPERATURE FUEL CELLS AND A MULTICOMPONENT SLEEVE FOR A CELL STACK
INSTALLATION CONSTITUEE DE PILES A COMBUSTIBLE HAUTE TEMPERATURE ET D'UNE GAINE MULTICOMPOSANT FORMANT UN EMPILEMENT DE PILES A COMBUSTIBLE

(30) Priorität: 21.03.2005 EP 05405252
(43) Veröffentlichungstag der Anmeldung: 12.12.2007
(73) Patentinhaber: Sulzer Hexis AG, 8400 Winterthur (CH)
(72) Erfinder: DAREMAS, Konstantin, CH-8352 Räterschen-Schottikon (CH); ZÄHRINGER, Thomas, CH-8404 Winterthur (CH)
(74) Vertreter: Sulzer Management AG
(86) Internationale Anmeldenummer: PCT/CH2006/000095
(87) Internationale Veröffentlichungsnummer: WO 2006/099756

(56) Entgegenhaltungen:
- EP-A- 1 037 296
- EP-A- 1 347 529

## Beschreibung

Die Erfindung betrifft eine Anlage mit Hochtemperatur-Brennstoffzellen und einer Multikomponenten-Hülle zu einem Zellenstapel gemäss Oberbegriff von Anspruch 1.

Eine derartige Anlage umfasst eine Brennstoffzellenbatterie, wie sie aus der EP-A- 1 037 296 (= P.6949) bekannt ist. Die Brennstoffzellen bilden einen zylindrischen Zellenstapel, an dessen Peripherie in axial ausgerichteten Kammern eine Nachverbrennung durchgeführt wird, wobei ein Abgas von rund 1000 °C entsteht. Zwischen den Nachverbrennungskammern befinden sich Eintrittsstellen, durch die vorgeheizte Prozessluft (kurz Luft) für stromliefernde, elektrochemische Reaktionen den Zellen zugeführt wird. Ein Brenngas wird über einen axialen Kanal im Zentrum des Stapels auf die Zellen verteilt.

Jede Brennstoffzelle umfasst zwei Teile, nämlich ein sogenanntes PEN-Element (kurz PEN genannt) und einen scheibenförmigen Interkonnektor. Das PEN-Element, das aus mindestens drei Schichten, nämlich P (Katode = positive Elektrode), E (Elektrolyt) und N (Anode) besteht, ist ein elektrochemisch aktives Element, mit dem die elektrochemischen Reaktionen durchführbar sind (bei 700 - 900 °C); es hat die Form einer dünnen, kreisförmigen Scheibe, die aus einem schichtförmigen Feststoffelektrolyten und zwei durch Beschichten aufgebrachten Elektroden, P bzw. N, besteht. Der Interkonnektor trennt einen Raum für die Luft von einem Raum für das Brenngas. Er weist eine Architektur auf mit einem reliefartigen Profil, mittels dem einerseits ein Fliessen des Brenngases von einer zentralen Eintrittstelle entlang dem PEN zur Peripherie ermöglicht wird. Andererseits wird durch die Architektur die Strömung der Luft in besonderer Weise gelenkt; die Luft wird von den Eintrittsstellen in einen zentralen Bereich und von dort entlang dem PEN zurück zur Peripherie geführt. An der Peripherie des Zellenstapels befinden sich diskret angeordnete Öffnungen für den Eintritt bzw. Austritt der Gase (Luft bzw. Brenngas).

Die Nachverbrennungskammern sind von Lagen oder Schalen aus wärmedämmendem Material umgeben, die zusammen mit den Kammern eine Multikomponenten-Hülle des Zellenstapels bildet. Innerhalb dieser Hülle und unmittelbar unter dem Zellenstapel ist ein Reformer angeordnet, in dem das Brenngas katalytisch zumindest teilweise in CO und H₂ umgesetzt wird. Es ist dabei Sauerstoff (Luft) dem Brenngas zugemischt, so dass sich eine partielle Oxidation ergibt. Mit der partiellen Oxidation wird die Erzeugung von CO und H₂ erst möglich, und zusätzlich wird Wärme für endotherme Reaktionen geliefert.

Die Multikomponenten-Hülle ist als ein Wärmedämmsystem ausgebildet. Dessen wärmedämmende Funktion spielt die Rolle eines externen Rekuperators: Statt dass die in den Zellen für die elektrochemischen Prozesse benötigte Luft zuerst in einem separaten externen Rekuperator vorerhitzt wird, wird die anfänglich kalte oder wenig vorgewärmte Luft als eine Wärmesenke verwendet, indem die vom Zellenstapel wegfliessende Wärme in der Hülle durch die Luft teilweise aufgenommen und wieder zu den Reaktionsorten zurückgeführt wird.

Die Hülle ist mehrlagig ausgebildet und weist gleichzeitig ein Kanalsystem für den Luftstrom auf. Zwischen einer äusseren Wand, die eine erste Lage oder Schale der Hülle bildet, und den inneren Komponenten der Hülle liegt ein erster Hohlraum, in dem eine Verteilung und eine Erwärmung der Luft bzw. Kühlung der Hülle erfolgt. In dem Kanalsystem, das an den ersten Hohlraum anschliesst, ergibt sich eine weitere Erwärmung der Luft. Anstelle oder zusätzlich zu den Kanälen können auch poröse, gasdurchlässige Teile in der Hülle eingebaut sein, die eine sogenannte dynamische Wärmedämmung bilden: Die Luft, die durch die Poren der Wärmedämmung in radialer Richtung strömt, nimmt Wärme auf, die vom Zellenstapel hauptsächlich durch Wärmestrahlung abgegeben und von dem Material der Wärmedämmung absorbiert worden ist. Die aufgenommenen Wärme wird von der Luft in den Zellenstapel zurück transportiert.

Die Nachverbrennungskammern sind als axial gerichtete Sammelkanäle ausgebildet, durch die das Abgas abgeführt wird. Das Abgas, das insbesondere abgesaugt wird, strömt aus den Kammern radial nach aussen und anschliessend axial weiter. Vor dem Übertritt aus der Hülle in den Zellenstapel wird die Luft an den äusseren Wänden der Nachverbrennungskammern weiter aufgeheizt; entsprechend wird durch das in den Kammern axial strömende Abgas Wärme abgegeben, die der bei der Nachverbrennung entstandenen Wärme und einem Teil der bei den elektrochemischen Reaktionen freigesetzten Wärme entspricht.

Die Brennstoffzellenbatterie wird in einer Anlage verwendet, die Teil einer Gebäude-Infrastruktur ist, wobei die mit den Brennstoffzellen umgewandelte Energie in Form von thermischer Energie (beispielsweise zu Heizzwecken) und von elektrischer Energie genutzt wird.

Nachteil der bekannten Anlage mit der Brennstoffzellenbatterie ist, dass axial in den Nachverbrennungskammern abströmendes Abgas zu ungünstigen Temperaturgradienten in Richtung der Stapelachse führt. Ausserdem ist eine Abdichtung zwischen Stapel und Kammerwänden problematisch. Dieser Nachteil ist ein konstruktives Problem, das mit einem unterschiedlichen Wärmeausdehnungsverhalten der Komponenten zusammen hängt.

Aufgabe der Erfindung ist es, eine Anlage mit Hochtemperatur-Brennstoffzellen und mit einer Multikomponenten-Hülle zu einem Zellenstapel zu schaffen, die bezüglich den genannten Nachteilen konstruktiv besser ausgebildet ist. Diese Aufgabe wird durch die im Anspruch 1 definierte Anlage gelöst.

Die Anlage mit Hochtemperatur-Brennstoffzellen umfasst eine Multikomponenten-Hülle zu einem Zellenstapel. Axial ausgerichtete Kammern für eine Nachverbrennung sind zwischen der Peripherie des Stapels und einem äusseren Bereich der Hülle angeordnet. Eine die Kammern fixierende Konstruktion umfasst einen korsettartigen Käfig, dessen senkrecht zur Stapelachse liegender Querschnitt im wesentlichen die Form eines regelmässigen Vielecks hat. Jeder Ecke dieses Vielecks ist eine Nachverbrennungskammer zugeordnet. Aus den Ecken wirken radiale Federkräfte jeweils auf die zugeordnete Kammer ein. Dabei werden Dichtkanten der Kammer auf Dichtungsstreifen zwischen Kammer und Stapel aufgepresst. Die Dichtkanten bilden einen geschlossenen Rand eines wannenförmigen Raums. Der wannenförmige Raum ist über einen Engpass mit einem axialen Sammelkanal für Abgas verbunden. Dieser Sammelkanal ist zwischen dem wannenförmigen Raum und der Ecke angeordnet.

Die abhängigen Ansprüche 2 bis 10 betreffen vorteilhafte Ausführungsformen der erfindungsgemässen Anlage.

### Nachfolgend wird die Erfindung anhand der Zeichnungen erläutert. Es zeigen:

- Fig. 1: eine Übersicht über die äusseren Teile einer Multikomponenten-Hülle, die einen Zellenstapel der erfindungsgemässen Anlage gegen aussen abschirmt,
- Fig. 2: einen Wärmetauscher für Heizzwecke, wie er für die erfindungsgemässe Anlage vorgesehen ist,
- Fig. 3: einen Teil der Multikomponenten-Hülle, dessen Aussenwand einen korsettartigen Käfig bildet,
- Fig. 4: ein oberes Ende einer Spanneinrichtung für den Zellenstapel,
- Fig. 5: ein unteres Ende der Spanneinrichtung,
- Fig. 6: eine Spannkräfte bewirkende Druckfeder der Spanneinrichtung,
- Fig. 7: einen Querschnitt durch den in Fig. 3 gezeigten Teil,
- Fig. 8: eine schematische Darstellung der erfindungsgemässen Anlage und deren Anschluss an einen Kamin und
- Fig. 9: eine schematische Darstellung eines elektronischen Geräts mit einer Leistungselektronik, das in der erfindungsgemässen Anlage zwecks Steuerung und elektrischer Wandlung eingebaut ist.

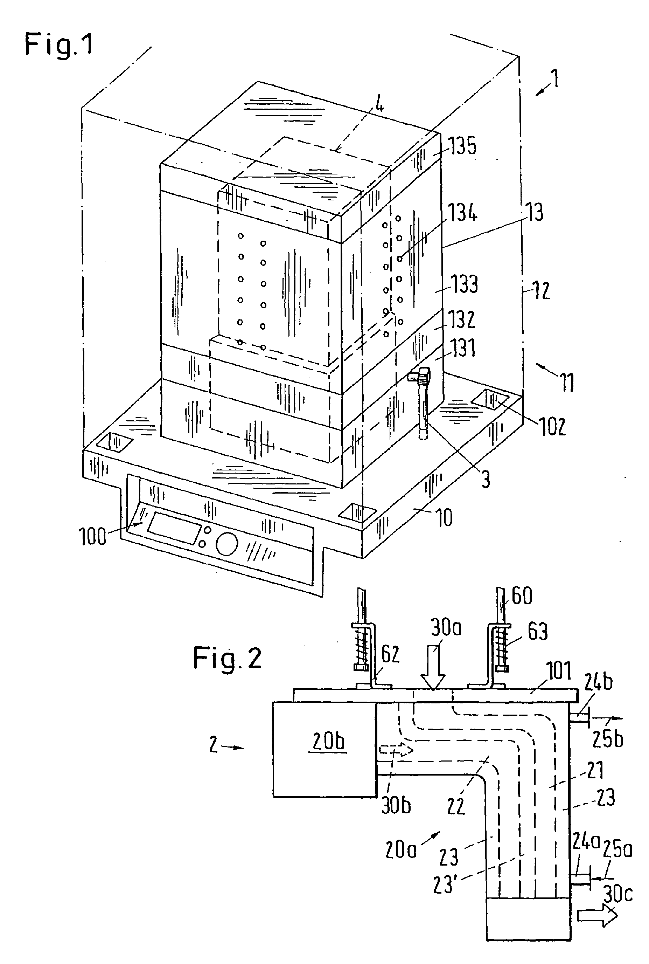

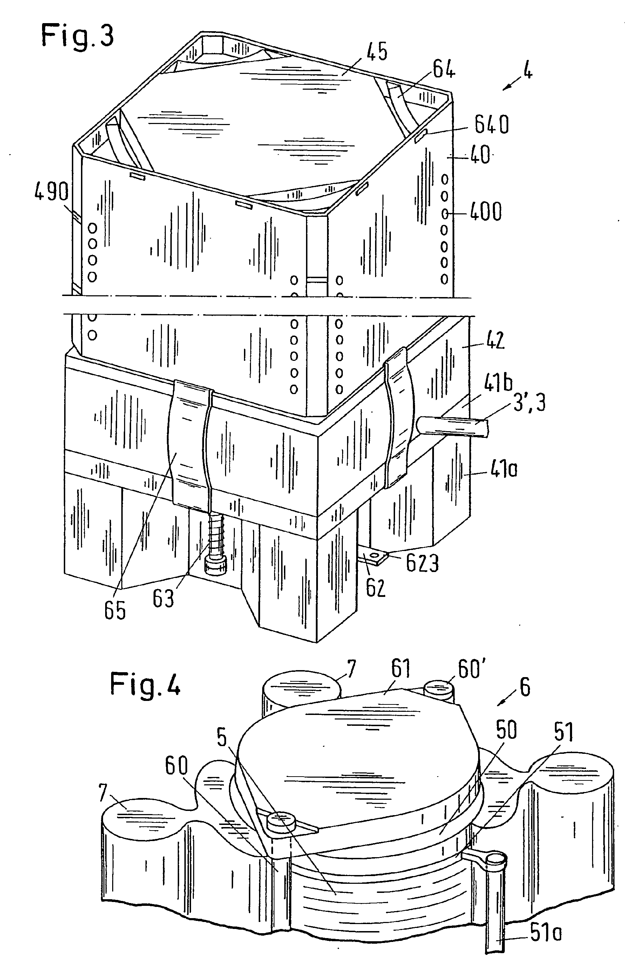

Ein oberer Teil der erfindungsgemässen Anlage 1 - siehe Fig. 1 - ist eine Brennstoffzellenbatterie 11, die aus einem Zellenstapel 5 (siehe Fig. 4) und einer Multikomponenten-Hülle besteht. Die Hülle, die den Zellenstapel 5 gegen die Umgebung abschirmt, ist auf einem Tisch 10 befestigt, der den oberen Abschluss des unteren Teils der Anlage 1 bildet und der Bedienungselemente 100 trägt. Die Multikomponenten-Hülle ist teilweise ähnlich wie eine russische Schachtelpuppe ("Matrjoschka") aufgebaut. Ein äusserer, strichpunktiert angedeuteter Hüllenteil 12 aus wärmedämmendem Material, das im Normalbetrieb der Anlage 1 nur Temperaturen unter ungefähr 60 °C ausgesetzt ist, schliesst einen inneren wärmedämmenden Hüllenteil 13 ein, der mit der Innenseite des äusseren Hüllenteils 12 einen Hohlraum bildet (nicht dargestellt). Vorerwärmte Luft (Prozessluft) gelangt in den Ecken des Tischs 10 durch Öffnungen 102 in den Hohlraum, den sie durchströmt.

Der innere Hüllenteil 13 umfasst einen zweiteiligen Sockel 131, 132 (der auch einteilig sein kann), einen Mantel 133 und einen Deckel 135 (die zusammengeklebt sind). Der untere Sockelteil 131 liegt auf dem Tisch 10 auf. Durch eine Leitung 3 wird das Brenngas (mit Zumischung von Luft für eine partielle Oxidation) in einen Reformer eingespeist, der sich innerhalb der Multikomponenten-Hülle auf der Höhe des oberen Sockelteils 132 befindet. Durch radiale Kanäle 134 im Mantel 133 gelangt die Luft des Hohlraums zu einer weiteren Einheit 4, die anhand der Figuren 3 bis 7 beschrieben wird. Beim Passieren der Kanäle 134 nimmt die Luft weiter Wärme aus dem inneren Hüllenteil 13 auf. Im Bereich der Kanäle 134 ist demnach der innere Hüllenteil 13 lokal als aktive Wärmedämmung ausgebildet. Die Prozessluft wird in der Einheit 4 weiter aufgeheizt, bevor sie in die Brennstoffzellen eintritt. Bei einer Nachverbrennung in der Einheit 4 wird die Luft Bestandteil eines Abgases. Das Abgas gelangt in axiale Sammelkanäle und strömt in diesen zu einem Sockel der Einheit 4, wo es durch radiale Kanäle in einen axialen, zentral angeordneten Ausgangskanal gelangt. Aus diesem Ausgangskanal wird Abgas 30a in den unteren Teil der Anlage 1 abgegeben: siehe Fig. 2. Die axialen Sammelkanäle können auch direkt, d.h. ohne Zusammenführung in einem gemeinsamen Ausgangskanal, in den unteren Teil der Anlage 1 führen.

In Fig. 2 ist ein Wärmetauscher 20a eines Heizgeräts 2 dargestellt, das im unteren Teil der Anlage 1 unmittelbar unter dem Tisch 10 angeordnet ist. Eine metallische Platte 101, vorteilhafterweise aus Aluminium, ist eine Komponente des Tisches 10. Die Brennstoffzellenbatterie 11 ist auf der Platte 101 befestigt; sie ist über eine Spanneinrichtung für den Zellenstapel 5 so befestigt, dass Wärme aus der heissen Multikomponenten-Hülle an den als Wärmesenke wirkenden Wärmetauscher abgeleitet wird, so dass eine für Federn ausreichend tiefe Temperatur an der Basis der Spanneinrichtung vorliegt. Eine Gasheizung 20b ist als Zusatzheizung zur Deckung von Spitzen des Wärmebedarfs (insbesondere an kalten Wintertagen) vorgesehen, oder zur Deckung des Wärmebedarfs im Sommer, wenn die Brennstoffzellen nicht im Betrieb sind.

Die Spanneinrichtung umfasst - siehe die Figuren 4 bis 6 - Spannstangen 60, die zwischen den Nachverbrennungskammern angeordnet sind. Ein Spannelement 62 der Spanneinrichtung steht mit dem Wärmetauscher in wärmeleitender Verbindung. Druckfedern 63 sind jeweils zwischen einem Ende der Spannstangen 60 und einer Lasche des Spannelements 62 auf den Spannstangen 60 aufgesetzt. Sie üben dabei eine Spannkraft auf die Spannstangen 60 aus. Die Druckfedern 63 sind durch das Spannelement 62 gegen den Zellenstapel abgeschirmt, so dass die Druckfedern 63 dank der Wärmesenke lediglich moderaten Temperaturen ausgesetzt sind, bei denen die Spannkraft erhalten bleibt. Die Spanneinrichtung ist aus einer Spannplatte 61, den Spannstangen 60, dem Spannelement 62 sowie den Druckfedern 63 zusammengesetzt. Die Zellen des Stapels werden zwischen der Spannplatte und dem Spannelement 62 auf einander gepresst.

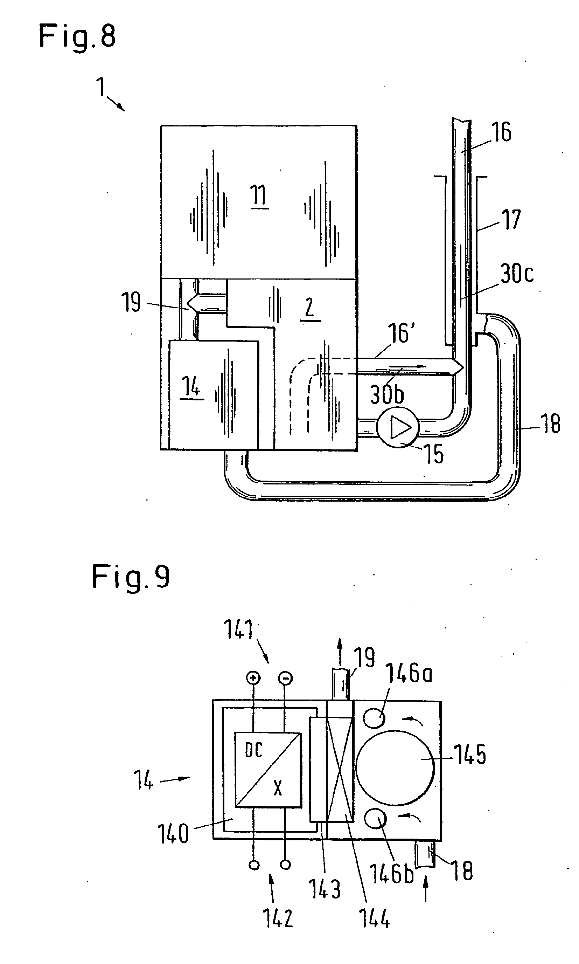

Der Wärmetauscher 20a umfasst zwei separate Kanäle 21 und 22 innerhalb eines doppelwandigen Mantels 23, der mit einer Trennwand zwischen den Kanälen 21, 22 eine zusammenhängende, von einem Wärmeträgermedium durchströmte Komponente bildet. Diese Komponente ist an eine Heizanlage für eine Raumheizung (auch Brauchwarmwasser) angeschlossen: an einem Stutzen 24a für einen Rücklauf 25a und an einem Stutzen 24b für einen Vorlauf 25b der Heizanlage. Im ersten Kanal 21 gibt das heisse Abgas 30a Wärme an das Wärmeträgermedium ab. Zusätzlich gibt ein zweites Gas, ein Verbrennungsgas 30b der Gasheizung 20b, im zweiten Kanal 22 Wärme an das Wärmeträgermedium ab. Das Verbrennungsgas 30b strömt bei einem Druck grösser als Umgebungsdruck durch den Wärmetauscher 20a, während der Druck des Abgases 30a kleiner ist, da dieses mit einem Sauggebläse (15 in Fig. 8) gefördert wird. Die abgekühlten Gase (Pfeil 30c) werden durch einen Kamin (Kamin 16 in Fig. 8) an die Umgebung abgegeben.

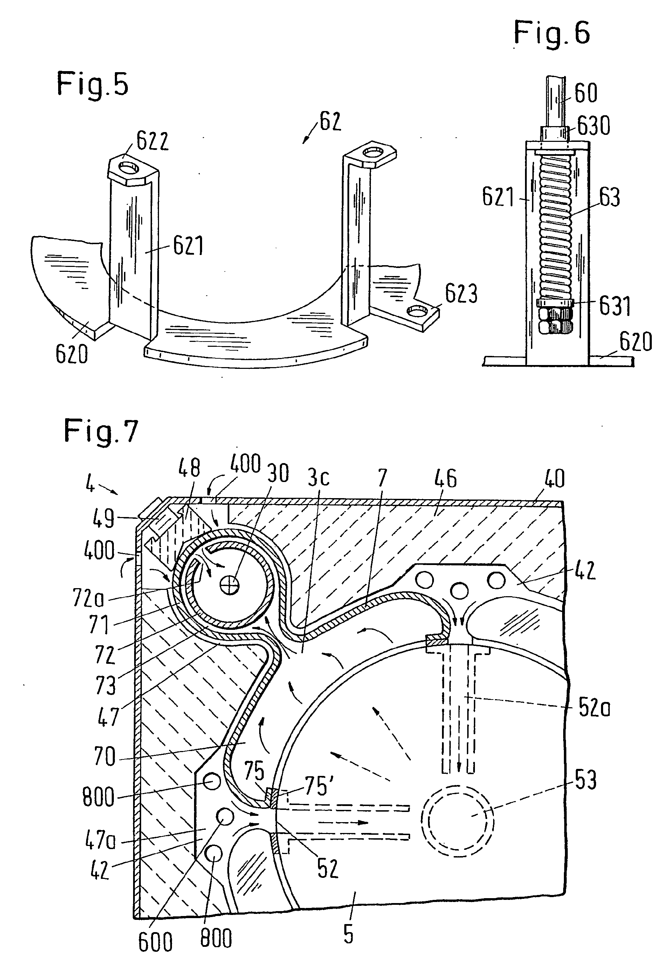

Fig. 3 zeigt die Einheit 4, die den innersten Teil der Multikomponenten-Hülle bildet. Diese Einheit 4, die den Zellenstapel 5 unmittelbar einschliesst, hat eine Aussenwand 40 mit der Funktion eines korsettartigen Käfigs. Die Einheit 4 umfasst axial ausgerichtete Kammern 7 für die Nachverbrennung (vgl. die Figuren 4 und 7). Zwischen der Peripherie des Stapels 5 und dem äusseren Bereich der Hülle (Teile 12, 13) ist eine die Kammern 7 fixierende Konstruktion angeordnet. Diese Konstruktion umfasst den korsettartigen Käfig 40, dessen senkrecht zur Stapelachse liegende Querschnitt im wesentlichen die Form eines regelmässigen Vielecks (hier Viereck) hat. Jeder Ecke dieses Vielecks ist eine Nachverbrennungskammer 7 zugeordnet. Aus den Ecken wirken radiale Federkräfte jeweils auf die zugeordnete Kammer 7 ein. Details werden weiter unten anhand der Fig. 7 beschrieben. Die Luft, die durch die Kanäle 134 des Hüllenteils 13 zuströmt, wird in einem zweiten Hohlraum (nicht dargestellt) zu den Ecken des Käfigs 40 umgelenkt, wo sie durch Löcher 400 in das Innere der Einheit 4 einströmt.

Die Einheit 4 wird am oberen Ende durch einen Deckel 45 abgeschlossen. In den Ecken des Käfigs 40 sind Blattfedern 64 in Form von nach unten gebogenen Metallstreifen angeordnet. Diese Blattfedern 64 sind jeweils in zwei Schlitzen 640 in der Wand des Käfigs 40 eingesteckt, so dass sie als elastische Befestigungsmittel für den Deckel 45 wirksam sind. Unten weist die Einheit 4 einen dreiteiligen Sockel 41 a, 41 b, 42 auf, der dem Sockel 131, 132 des Hüllenteils 13 entspricht. Mit Spangen 65 ist der Käfig 40 am mittleren Sockelteil 41 b lösbar und elastisch befestigt. Der Reformer, zu dem die Gasleitung 3 führt, ist im oberen Sockelteil 42 angeordnet. Eine Hülse für den Reformer bildet zusammen mit einem horizontalen Gasleitungsstück 3' - in einem günstigen Ausführungsbeispiel - ein monolithisches Stück aus einem keramischen Material, welches die Form einer Tabakpfeife hat. Der Reformer, der vorteilhafterweise ein zylindrischer Wabenkörper mit einer katalytischen Oberflächenbeschichtung ist, wird in den Kopf dieser "Tabakpfeife" eingefügt (mit Dichtungen zwischen der Aussenwand des Wabenkörpers und der Innenwand der Hülse). In der "Tabakpfeife" kann auch ein Strahlenschutz eingebaut sein, damit die Gastmeperatur im Boden nicht zu hoch wird. Im unteren Sockelteil 41 a ist das Spannelement 62 mit den Druckfedern 63 angeordnet. Das Spannelement 62 wird an Laschen 623 auf dem Tisch 10 (Platte 101, vgl. Fig. 2) angeschraubt.

Der Deckel 45 dient einerseits als Wärmedämmung. Andererseits werden mit ihm die Nachverbrennungskammern 7 zwecks deren Fixierung nach unten gedrückt. Für dieses Andrücken können auch zusätzliche Spannmittel unterhalb des Deckels 45 vorgesehen sein, die einzeln auf die Kammern 7 einwirken. Zum Andrücken der Nachverbrennungskammer 7 können auch keramische Stifte vorgesehen sein, die durch den Deckel 45 geführt sind und auf die die Blattfedern 64 einwirken. Eine weitere Möglichkeit der Fixierung ist, die Kammern 7 im Sockelbereich anzuschrauben.

Fig. 4 zeigt das obere Ende der Spanneinrichtung für den Zellenstapel 5, das aus einer stabilen Platte, der Spannplatte 61, gebildet ist. Zwei Spannstangen 60 sind mit Köpfen 60' in Bohrungen der Spannplatte 61 verankert. Sie verbinden diese Platte 61 mit dem Spannelement 62, das in Fig. 5 detaillierter gezeigt ist. Eine wärmedämmende und stromisolierende Platte 50 ist zwischen der Spannplatte 61 und dem Zellenstapel 5 angeordnet, der an seinem oberen Ende durch einen Stromsammler 51 abgeschlossen ist. Eine Stromleitstange 51a dient zur Leitung des im Stromsammler 51 aufgenommenen elektrischen Stroms. Fig. 4 zeigt auch die oberen Enden von drei Nachverbrennungskammern 7; die vierte dieser Kammern 7 ist weggelassen.

Die Spannplatte 61 kann auch eine andere als die in Fig. 4 dargestellte Form haben. So kann sie beispielsweise auch balkenförmig ausgebildet sein. Das Material, aus dem die Spannplatte 61 herzustellen ist, muss bei den hohen Temperaturen, die in der Nähe des heissen Zellenstapels 5 auftreten, stabil bleiben. Als Material kommt eine metallische Legierung oder ein keramisches Material, z. B. Siliziumnitrid, in Frage.

Die Figuren 5 und 6 zeigen das Spannelement 62, welches das untere Ende der Spanneinrichtung bildet. Die eine Spannkraft bewirkende Druckfeder ist an einer Lasche 622 angebracht, die das Kopfende eines Bügels 621 bildet. Dieser Bügel 621 beginnt an einem Ring 620 (nur eine Hälfte gezeichnet), der an mindestens zwei Laschen 623 an der Platte 101 des Tischs 10 befestigt wird. In eine Hülse 630 an der Lasche 622 ist die Spannstange 60 eingeschoben. Die Druckfeder 63 ist zwischen einer unteren Ringscheibe 631, die gegen unten durch zwei Muttern gehalten ist, und der Hülse 630 angeordnet. Dank der Wärmeabführung durch den Bügel 621 an den Ring 620 und von dort an die Platte 101 sowie an den Wärmetauscher 20a, wird die Druckfeder 63 nie unzulässig heiss, so lange das Wärmeträgermedium des Wärmetauschers 20a kühlt (zulässige Maxiamaltemperatur der Feder: 300°C). Die von den Druckfedern 63 auf die Spannstangen 60 ausgeübte Spannwirkung erlahmt daher nicht.

Fig. 7 zeigt einen teilweise gezeichneten Querschnitt durch die in Fig. 3 dargestellten Einheit 4. Aus vier Ecken des korsettartigen Käfigs 40 wirken radiale Federkräfte auf die vier Nachverbrennungskammern 7 ein. Die Kammer 7 hat eine Aussenwand 71 und umfasst einen wannenförmigen Nachverbrennungsraum 70, der einen geschlossenen Rand als eine Dichtkante 75 aufweist. Durch die radiale Federkraft wird die Dichtkante 75 auf einen Dichtungsstreifen 75' zwischen Kammer 7 und Stapel 5 aufgepresst. Der wannenförmige Raum 70 ist über einen Engpass 73 mit einem axialen Sammelkanal 72 für Abgas 30 verbunden. Dieser Sammelkanal 72 ist zwischen dem wannenförmigen Raum 70 und der Ecke des korsettartigen Käfigs 40 angeordnet.

Der korsettartige Käfig 40 hat die Form eines viereckigen Prismas. Die Ecken sind stumpf, d.h. die Form dieser Ecken ergibt sich durch Wegschneiden eines Dreiecks von einer spitzen Ecke. Die radialen Federkräften sind mit auf den Nachverbrennungskammern 7 aufliegenden Leisten 48 und Blattfedern 49 erzeugbar. Die Blattfedern 49 sind in Schlitzen 490 in den stumpfen Ecken eingehängt. Die Leisten 48 bestehen vorzugsweise aus einem keramischen, Wärme schlecht leitenden Material. Die Blattfedern 49 sind so vor der hohen Temperatur der Nachverbrennungskammer 7 geschützt.

Der axiale Sammelkanal 72 bildet mit einem Bereich der äusseren Kammerwand 71 den Engpass 73 oder einen Teil des Engpasses 73. Der Engpass 73 ist weitgehend ringspaltförmig. Der Sammelkanal 72 weist einen Längsspalt 72a auf, der als Durchgang für Abgas 30 aus dem Engpass 73 in den Sammelkanal 72 dient. Der Querschnitt der Nachverbrennungskammer 7 - einschliesslich Sammelkanal 72 - ist spiegelsymmetrisch. Die Symmetrieachse liegt auf der Halbierenden des Winkels, der durch den korsettartigen Käfig 40 in der Ecke aufgespannt wird.

Zwischen dem korsettartigen Käfig 40 und den Nachverbrennungskammern 7 sind Füllkörper 46 angeordnet. Zwischen den Füllkörpern 46 und den Oberflächen der Kammern 7 sind spaltförmige Kanäle 47 frei gehalten. Diese führen von den Ecken entlang der Kammerwand 71 zu Lufteintrittsstellen 52 der Zellen des Stapels 5. Für die Fertigung der Kammern 7 und der Füllkörper 46 wird ein bei hohen Temperaturen beständiges, Wärme gut leitendes Material (Metall oder keramisches Material wie z. B. Siliziumkarbid, Steatit) bzw. ein keramisches, Wärme schlecht leitendes Material verwendet.

Wie bereits in der Einleitung beschrieben, umfasst eine Brennstoffzelle ein PEN und einen Interkonnektor. Der Interkonnektor, der einen Raum für die Luft von einem Raum für das Brenngas trennt, weist ein reliefartiges Profil auf, durch das die Strömung der Luft in besonderer Weise gelenkt wird. Durch radiale Kanäle 52a gelangt die Luft von den Lufteintrittsstellen 52 in einen zentralen Bereich und von dort entlang dem PEN zurück zur Peripherie. Auf der anderen Seite des PEN fliesst das reformierte Brenngas (CO und H₂ enthaltend) von einem zentralen Kanal 53, der sich längs der Achse des Zellenstapels 5 erstreckt, zur Peripherie. Die beiden radial nach aussen fliessenden Gasströme (Prozessluft und Brenngas) vermischen sich in den Nachverbrennungsräumen 70, wo die nicht reagierten Brennstoffreste verbrannt werden. Das dabei entstehende Abgas 30 fliesst zu den Sammelkanälen 72 weiter. Dank den Engpässen 73 ist die Strömung weitgehend horizontal gerichtet. Ein vertikales Abströmen erfolgt erst in den Sammelkanälen 72. Aus den Sammelkanälen 72 wird praktisch keine Wärme mehr an die zu erhitzende Luft in den Kanälen 47 abgegeben, so dass sich praktisch keine axialen Temperaturgradienten ausbilden. Somit ist der eine Teil der Aufgabe, die der Erfindung zugrunde liegt, gelöst.

Dank der elastischen Fixierung durch die Konstruktion mit dem korsettartigen Käfig 40, ist auch der zweite Teil der Aufgabe gelöst. Zusätzlich mit der elastischen Fixierung des Deckels 45 am Käfig 40 liegt eine Konstruktion vor, die einen Ausgleich von Massungenauigkeiten ergibt, die aufgrund von unterschiedlichen Wärmeausdehnungsverhalten der diversen Bauteile unvermeidlich sind.

Die Füllkörper 46 haben in deren Mitte eine Vertiefung, durch die jeweils ein Hof 47a vor den Lufteintrittsstellen 52 offen bleibt. In Fig. 7 blickt man im Hof 47a auf die Oberfläche des Sockelteils 42. Es sind dort zwei Löcher 800 und ein Loch 600 zu sehen. Das Loch 600 besteht für die Spannstange 60 der Spanneinrichtung oder die Stromleitstange 51a. Durch die Löcher 800 werden Heizstäbe oder Rohrheizkörper geführt (nicht dargestellt), die beim Anfahren der Anlage erforderlich sind. Damit vorzugsweise sich in allen Höfen 47a gleiche Strömungsverhältnisse einstellen, wird zusätzlich eine "Dummystange" eingesetzt. Es ist nur eine Stromleitstange 51a benötigt; und zwei Stellen stehen für sie zur Verfügung. An der überzähligen Stelle wird die "Dummystange" angeordnet.

Fig. 8 zeigt eine schematische Darstellung der erfindungsgemässen Anlage 1 und deren Anschluss an einen Kamin 16, durch den das Abgas 30c an die Umgebung abgegeben wird. Durch ein Hüllrohr 17 wird frische Luft aus der Umgebung angesaugt und an der Oberfläche eines unteren Bereichs des Kamins 16 vorerwärmt. Die Brennstoffzellenbatterie 11 ist auf das Heizgerät 2 aufgesetzt. Eine elektronisches Gerät 14 mit einer Leistungselektronik - siehe Fig. 9 - ist an ein Ansaugrohr 18 für Luft angeschlossen, durch das eine Verbindung zum Hüllrohr 17 hergestellt ist. Nach Durchtritt der Luft durch das elektronische Gerät 14 gelangt diese durch ein Verteilrohr 19 in die Brennstoffzellenbatterie 11 und - gegebenenfalls, wenn die Zusatzheizung in Betrieb gesetzt ist - in die Gasheizung 20b (siehe Fig. 2). Ein Sauggebläse 15 fördert das Abgas 30a der Brennstoffzellenbatterie 11 in den Kamin 16. Abgas 30b der Gasheizung 20b gelangt durch eine separate Leitung 16' in den Kamin 16. Ein zweites Gebläse oder ein Ventilator für die Zusatzheizung ist nicht dargestellt.

Fig. 9 zeigt eine schematische Darstellung des elektronischen Geräts 14, das in der erfindungsgemässen Anlage 1 zwecks Steuerung und elektrischer Wandlung mit einem Wandler 140 eingebaut ist. Im Wandler 140, der mit zwei Eingangspolen 141 an die Brennstoffzellenbatterie 11 angeschlossen ist, geht Gleichstrom DC in einen transformierten Strom oder eine Nutzspannung X über, die vorzugsweise ein Wechselspannung ist. Die Nutzspannung X ist über zwei Ausgangspole 142 an einen Verbraucher (beispielsweise elektrisches Netz) angelegt. Die durch das Rohr 18 angesaugte Luft umspült einen Transformator 145 sowie weitere Komponenten 146a, 146b (z. B. Dioden, Filter, Stromglättungsdrosseln) und fliesst schliesslich zwischen Rippen eines Kühlkörpers 144 zum Verteilrohr 19. Der Kühlkörper 144 leitet Verlustwärme aus Elementen 143 der Leistungselektronik ab.

Der Gesamtwirkungsgrad der Anlage 1 wird durch die besondere Luftführung verbessert, da die durch die elektrische Wandlung entstandene Verlustwärme an die Prozessluft abgegeben wird. Die zu kühlenden Zonen sind derart ausgeführt, dass der Druckverlust des Luftstroms möglichst gering und die Kühlwirkung auf die genannten Komponenten bzw. Elemente möglichst gross ist. Dank der Zwangskühlung (verglichen mit einer natürlichen Konvektion) kann der Kühlkörper 144 relativ klein ausgeführt werden. Wenn mit der Brennstoffzellenbatterie 11 eine maximale elektrischen Leistung erzeugt wird, dann ist auch der Luftdurchsatz maximal und folglich auch die Leistung der Zwangskühlung. Diese Kühlung weist ein selbst regulierendes Verhalten auf: Wird die Leistung der Brennstoffzellenbatterie 11 reduziert, so verringert sich entsprechend der Luftbedarf; dieser reicht weiterhin aus, die verringerte Verlustwärme abzuführen.

## Patentansprüche

1. Anlage (1) mit Hochtemperatur-Brennstoffzellen (11) und einer Multikomponenten-Hülle (4, 12, 13) zu einem Zellenstapel (5), die axial ausgerichtete Kammern (7) für eine Nachverbrennung umfasst, **dadurch gekennzeichnet, dass** zwischen der Peripherie des Stapels (5) und einem äusseren Bereich der Hülle eine die Kammern fixierende Konstruktion angeordnet ist, dass diese Konstruktion einen korsettartigen Käfig (40) umfasst, dessen senkrecht zur Stapelachse liegender Querschnitt im wesentlichen die Form eines regelmässigen Vielecks hat, dass jeder Ecke dieses Vielecks eine Nachverbrennungskammer zugeordnet ist, dass aus den Ecken radiale Federkräfte jeweils auf die zugeordnete Kammer einwirken und dabei Dichtkanten (75) der Kammer auf Dichtungsstreifen (75') zwischen Kammer und Stapel aufpressen, dass die Dichtkanten durch einen geschlossenen Rand eines wannenförmigen Raums gebildet sind, dass der wannenförmige Raum über einen Engpass (73) mit einem axialen Sammelkanal (72) für Abgas (30) verbunden ist, und dass dieser Sammelkanal zwischen dem wannenförmigen Raum und der Ecke angeordnet ist.

2. Anlage nach Anspruch 1, **dadurch gekennzeichnet, dass** zwischen dem korsettartigen Käfig (40) und den Nachverbrennungskammern (7) Füllkörper (46) angeordnet sind und dass zwischen den Füllkörpern und den Oberflächen der Kammern spaltförmige Kanäle (47) frei gehalten sind, die von den Ecken entlang den wannenförmigen Räumen zu Lufteintrittsstellen (52) der Zellen führen, wobei für die Fertigung der Kammern und der Füllkörper ein bei hohen Temperaturen beständiges, Wärme gut leitendes Material bzw. ein keramisches, Wärme schlecht leitendes Material verwendet ist.

3. Anlage nach Anspruch 1 oder 2, **dadurch gekennzeichnet, dass** der korsettartige Käfig (4) die Form eines viereckigen Prismas hat und dass die Ecken vorzugsweise stumpf sind, d.h. dass die Form dieser Ecken durch Wegschneiden eines Dreiecks von einer spitzen Ecke erzeugbar ist.

4. Anlage nach einem der Ansprüche 1 bis 3, **dadurch gekennzeichnet, dass** die radialen Federkräfte mit auf den Nachverbrennungskammern (7) aufliegenden Leisten (48) und Blattfedern (49) erzeugbar sind, wobei die Blattfedern in Schlitzen in den Ecken eingehängt sind und die Leisten vorzugsweise aus einem keramischen, Wärme schlecht leitenden Material bestehen.

5. Anlage nach einem der Ansprüche 1 bis 4, **dadurch gekennzeichnet, dass** der axiale Sammelkanal (72) mit einem Bereich einer äusseren Kammerwand den Engpass (73) oder einen Teil des Engpasses bildet, dass dieser Engpass ringspaltförmig ausgebildet ist und dass der Sammelkanal einen Längsspalt (72a) aufweist, der als Durchgang für Abgas aus dem Engpass in den Sammelkanal dient.

6. Anlage nach einem der Ansprüche 1 bis 5, **dadurch gekennzeichnet, dass** der Querschnitt der Nachverbrennungskammer (7) - einschliesslich Sammelkanal (72) - spiegelsymmetrisch ist und dass im eingebauten Zustand die Symmetrieachse auf der Halbierenden des Winkels liegt, der durch den korsettartigen Käfig (40) in der zugeordneten Ecke aufgespannt ist.

7. Anlage nach einem der Ansprüche 1 bis 6, **dadurch gekennzeichnet, dass** die Sammelkanäle (72) der Nachverbrennungskammern (7) direkt oder indirekt in einen Wärmetauscher (20a) münden, der zur Gewinnung von thermischer Energie zu Heizzwecken vorgesehen ist, wobei in diesem Wärmetauscher ein zweiter Kanal (22) integriert ist, nämlich für Verbrennungsgase aus einem Hilfsbrenner, und die Oberseite dieses Wärmetauschers als Träger für die Multikomponenten-Hülle ausgebildet ist.

8. Anlage nach Anspruch 7, **dadurch gekennzeichnet, dass** die Sammelkanäle (72) der Nachverbrennungskammern (7) in radiale Kanäle der Hülle unterhalb des Zellenstapels münden und diese Kanäle sich zentral in einem axialen Ausgangskanal für das Abgas (30c) treffen, wobei der Ausgangskanal in den Wärmetauscher (20a) mündet.

9. Anlage nach einem der Ansprüche 1 bis 8, **dadurch gekennzeichnet, dass** am oberen Ende des korsettartigen Käfigs (40) ein Deckel (45) vorgesehen ist und dass in den Ecken des Käfigs Blattfedern (64) angeordnet und jeweils in zwei Schlitzen (640) in der Wand des Käfigs eingehängt sind, so dass sie als elastische Befestigungsmittel für den Deckel wirksam sind.

10. Anlage nach einem der Ansprüche 2 bis 8, **dadurch gekennzeichnet, dass** Spannstangen (60) einer Spanneinrichtung für den Zellenstapel (5), Heizstäbe, Stromleitstangen (51 a) und/oder "Dummystangen" zwischen der Peripherie und den Füllköpern (46) vor den Lufteintrittsstellen (52) der Zellen angeordnet sind.

## Claims

1. A plant (1) with high temperature fuel cells (11) and a multi-component sleeve (4, 12, 13) for a cell stack (5) which includes axially directed chambers (7) for an afterburning process, **characterized in that** a construction which fixes the chambers is arranged between the periphery of the stack (5) and an outer region of the sleeve; **in that** this construction includes a corset-like cage (40) the cross-section of which perpendicular to the stack axis has essentially the shape of a regular polygon, **in that** an afterburning chamber is associated with each corner of this polygon, **in that** radial spring forces respectively act from the corners onto the associated chamber and thereby press sealing edges (75) of the chamber onto sealing strips (75') between chamber and stack, **in that** the sealing edges are formed by a closed edge of a trough-like space, **in that** the trough-like space is connected via a narrow passage (73) to an axial collection passage (72) for exhaust gas (30) and **in that** this collecting passage is arranged between the trough-like space and the corner.

2. A plant in accordance with claim 1, **characterized in that** filling bodies (46) are disposed between the corset-like cage (40) and the afterburning chambers (7) and **in that** gap-like passages (47) are kept free between the filling bodies and the surfaces of the chambers with the passages leading from the corners along the trough-like spaces to air entry points (52) of the cells, wherein the chambers and the filling bodies are respectively manufactured of a material which conducts heat well and which is resistant to high temperatures and of a ceramic material which conducts heat poorly.

3. A plant in accordance with claim 1 or claim 2, **characterized in that** the corset-like cage (4) has the shape of a four-cornered prism **in that** the corners are preferably blunt, i.e. that the shape of these corners can be produced by cutting away a triangle from a pointed corner.

4. A plant in accordance with any one of the claims 1 to 3, **characterized in that** the radial spring forces can be produced with strips (38) which lie on the afterburning chambers (7) and leaf springs (49), with the leaf springs being suspended in slots in the corners and with the strips preferably consisting of a ceramic material which conducts heat poorly.

5. A plant in accordance with any one of the claims 1 to 4, **characterized in that** the axial collection passage (72) forms the narrow passage (73) with a region of an outer chamber wall or forms a part of the narrow passage, **in that** this narrow passage is of ring-gap shape and **in that** the collecting passage has a longitudinal gap (72a) which serves as a passage for exhaust gas from the narrow passage into the collecting passage.

6. A plant in accordance with any one of the claims 1 to 5, **characterized in that** the cross-section of the afterburning chamber (7) - including the collecting passage (72) - is of mirror symmetry and **in that**, in the installed state, the axis of symmetry lies on the bisector of the angle which is spanned by the corset-like cage (40) in the associated corner.

7. A plant in accordance with any one of the claims 1 to 6, **characterized in that** the collecting passages (72) of the afterburning chambers (7) open directly or indirectly into a heat exchanger (20a) which is provided for obtaining thermal energy for heating purposes, wherein a second passage (22) is integrated into this heat exchanger, namely for combustion gases from an auxiliary burner, and the top side of this heat exchanger is formed as a carrier for the multi-component sleeve.

8. A plant in accordance with claim 7, **characterized in that** the collecting passages (72) of the afterburning chambers (7) open into radial passages of the sleeve below the cell stack and these passages meet centrally in an axial outlet passage for the exhaust gas (30c), with the outlet passage opening into heat exchanger (20a).

9. A plant in accordance with any one of the claims 1 to 8, **characterized in that** a lid (45) is provided at the upper end of the corset-like cage (40) and **in that** leaf springs (64) are arranged in the corners of the cage and are respectively suspended in two slots (640) in the wall of the cage so that they are active as elastic attachment means for the lid.

10. A plant in accordance with any one of the claims 2 to 8, **characterized in that** clamping bars (60) of a clamping device for the cell stack (5), heating bars, current conducting bars (51a) and/or "dummy bars" are disposed between the periphery and the filling bodies (46) in front of the air entry points (52) of the cells.

## Revendications

1. Installation (1) avec des piles à combustible haute température (11) et une gaine multicomposant (4, 12, 13) formant un empilement de piles (5), qui comprend des enceintes (7) orientées axialement pour une post-combustion, **caractérisée en ce qu'**il est disposé entre la périphérie de la pile (5) et une zone extérieure de la gaine une construction fixant les enceintes, **en ce que** cette construction comprend une cage en forme de corset (40) dont la section transversale s'étendant perpendiculairement à l'axe de la pile a sensiblement la forme d'un polygone régulier, **en ce qu'**il est associé à chaque angle de ce polygone une enceinte de post-combustion, **en ce que**, à partir des angles, des forces de ressort radiales agissent respectivement sur l'enceinte associée et, ce faisant, pressent des arêtes d'étanchéité (75) de l'enceinte sur des bandes d'étanchéité (75') entre l'enceinte et la pile, **en ce que** les arêtes d'étanchéité sont formées par un bord fermé d'une enceinte en forme de cuve, **en ce que** l'enceinte en forme de cuve est reliée par un étranglement (73) à un canal de collecte axial (72) pour le gaz d'échappement (30), et **en ce que** ce canal de collecte est disposé entre l'enceinte en forme de cuve et l'angle.

2. Installation selon la revendication 1, **caractérisée en ce que** sont disposés entre la cage en forme de corset (40) et les enceintes de post-combustion (7) des corps de remplissage (46), et **en ce que**, entre les corps de remplissage et les surfaces des enceintes, des canaux en forme de fente (47) sont maintenus libres qui mènent des angles le long des enceintes en forme de cuve à des emplacements d'entrée d'air (52) des piles, où pour la fabrication des enceintes et des corps de remplissage est utilisé un matériau bon conducteur de chaleur respectivement un matériau céramique, mauvais conducteur de chaleur.

3. Installation selon la revendication 1 ou 2, **caractérisé en ce que** la cage en forme de corset (4) a la forme d'un prisme carré et **en ce que** les angles sont de préférence émoussés, c'est-à-dire que la forme de ces angles peut être produite en découpant un triangle d'un angle aigû.

4. Installation selon l'une des revendications 1 à 3, **caractérisé en ce que** les forces de ressort radiales peuvent être produites par des barrettes (48) reposant sur les enceintes de post-combustion (7) et des ressorts à lame (49), où les ressorts à lame sont accrochés dans des fentes dans les angles, et les barrettes sont réalisées de préférence en un matériau céramique, mauvais conducteur de chaleur.

5. Installation selon l'une des revendications 1 à 4, **caractérisée en ce que** le canal de collecte axial (72) forme avec une zone d'une paroi d'enceinte extérieure l'étranglement (73) ou une partie de l'étranglement, **en ce que** cet étranglement est réalisé en forme de fente annulaire et **en ce que** le canal de collecte présente une fente longitudinale (72a) qui sert de passage aux gaz d'échappement de l'étranglement dans le canal de collecte.

6. Installation selon l'une des revendications 1 à 5, **caractérisée en ce que** la section transversale de l'enceinte de post-combustion (7) -y compris le canal de collecte (72)- est d'une symétrie spéculaire, et **en ce que**, à l'état monté, l'axe de symétrie se situe sur la bissectrice de l'angle qui est formée par la cage en forme de corset (40) dans l'angle associé.

7. Installation selon l'une des revendications 1 à 6, **caractérisée en ce que** les canaux de collecte (72) des enceintes de post-combustion (7) débouchent directement ou indirectement dans un échangeur de chaleur (20a), qui est prévu pour l'obtention d'énergie thermique à des fins de chauffage, où est intégré dans cet échangeur de chaleur un deuxième canal (22), à savoir pour les gaz de combustion d'un brûleur auxiliaire, et le côté supérieur de cet échangeur de chaleur est réalisé comme support de la gaine multi-composant.

8. Installation selon la revendication 7,
**caractérisée en ce que** les canaux de collecte (72) des enceintes de post-combustion (7) débouchent dans des canaux radiaux de la gaine en dessous de la pile à combustible, et ces canaux se rencontrent centralement dans un canal de sortie axial pour le gaz d'échappement (30c), où le canal de sortie débouche dans l'échangeur de chaleur (20a).

9. Installation selon l'une des revendications 1 à 8, **caractérisée en ce qu'**il est prévu à l'extrémité supérieure de la cage en forme de corset (40) un couvercle (45), et **en ce que** dans les angles de la cage, des ressorts à lames (64) sont disposés et sont accrochés respectivement dans deux fentes (640) dans la paroi de la cage de sorte qu'ils agissent comme moyens de fixation élastiques pour le couvercle.

10. Installation selon l'une des revendications 2 à 8, **caractérisée en ce que** sont disposés des barres de serrage (60) d'une installation de serrage pour l'empilement de piles (5), cartouches chauffantes, tiges conductrices de courant (51a) et/ou "tiges fictives" entre la périphérie et les corps de remplissage (46) devant les emplacements d'entrée d'air (52) des piles.
